# EUROPÄISCHE PATENTSCHRIFT

(11) **EP 2 520 191 B1**
(45) Veröffentlichungstag und Bekanntmachung des Hinweises auf die Patenterteilung: **02.07.2014**
(21) Anmeldenummer: 12166096.3
(22) Anmeldetag: 30.04.2012
(51) Int. Cl.: A45D 44/06, F16M 13/02, F16M 11/04

(54) **Wandhalterung für ein Personal-Care-Gerät**
Wall holder for a personal care device
Fixation murale pour appareil de soins personnels

(30) Priorität: 04.05.2011 DE 202011050033 U
(43) Veröffentlichungstag der Anmeldung: 07.11.2012
(73) Patentinhaber: WIK Far East Ltd., North Point, Hong Kong (CN)
(72) Erfinder: Speh, Christoph, 45475 Mülheim an der Ruhr (DE)
(74) Vertreter: Haverkamp, Jens

(56) Entgegenhaltungen:
- WO-A1-2006/051291
- US-A- 3 361 265
- US-A- 3 952 382
- US-A- 3 964 139
- US-A- 5 867 877
- US-A1- 2006 051 291
- US-A1- 2007 290 110
- US-A1- 2007 290 110

## Beschreibung

Die Erfindung betrifft eine Wandhalterung für ein elektrisches Personal-Care-Gerät mit einer Geräteaufnahme zum Einsetzen eines Teils des Gerätes, wenn dieses an die Wandhalterung angeschlossen werden soll. Des Weiteren betrifft die Erfindung eine Anordnung, die eine Wandhalterung sowie ein elektrisches Personal-Care-Gerät umfasst.

Personal-Care-Geräte, vor allem solche, die für eine Haarpflege verwendet werden, wie beispielsweise Haartrockner oder Straightener, sind elektrische Personal-Care-Geräte, zu denen es Halterungen gibt, um derartige Geräte aufzunehmen. Bekannt sind derartige Halterungen für Haartrockner. Diese Halterungen sind nach Art eines Köchers konzipiert, in den das den Luftstrom fördernde, typischerweise tubusartige Gehäuseteil eingesetzt werden kann. Die Halterungen sind zumeist als Wandhalterungen ausgeführt. Im Hotelbereich verfügen derartige Wandhalterungen zudem über die elektrischen Anschlusskomponenten für den Haartrockner, und zwar dergestalt, dass der Haartrockner ohne Zwischenschaltung eines Steckers dauerhaft elektrisch angeschlossen ist. Dieses erfolgt auch vor dem Hintergrund, ein Entwenden möglichst zu unterbinden.

Während Haartrockner aufgrund ihrer geometrischen Auslegung geeignet sind, in einer köcherartigen Halterung bei Nichtgebrauch aufgenommen zu werden, da sich der Griff auf dem oberen Rand der Halterung abstützt, ist dieses bei anderen Personal-Care-Geräten nicht immer möglich. Dieses trifft für solche Personal-Care-Geräte zu, die im Unterschied zu Haartrockner keinen abgewinkelten Griffabschnitt aufweisen. Infolgedessen müsste eine solche köcherartige Halterung ein Durchrutschen des Personal-Care-Gerätes, beispielsweise des Straighteners verhindern. Dieses gelingt jedoch nur, wenn die nach Gebrauch heißen Haarformplatten bzw. deren unmittelbare Umgebung in einer Überkopfanordnung in die köcherförmige Halterung eingesteckt werden. Eine solche Anordnung ist aufgrund der dann unpraktischen Kabelführung unerwünscht. Zudem eignen sich nicht beliebige Materialien zum Ausbilden der Halterung. Auch wäre es wünschenswert, wenn die Wärme des Gerätes nicht in Richtung zu den in dem Gerät enthaltenen elektrischen Komponenten geführt wird, was der Fall wäre, wenn ein solches Gerät in einer Überkopfanordnung in einen solchen Halteköcher eingesetzt wird.

Die US 3,964,139 zeigt eine Spritzenhalterung, z.B. für eine Infusionspumpe, wobei paarige Klammerelemente dazu vorgesehen sind, den Tubus der Spritze zu umgreifen. Die Klammerelemente können hierbei um an einem Rahmen fest positionierte Drehachsen zwischen einer offenen und einer geschlossenen Stellung geschwenkt werden. Des Weiteren sind zwei Hebelelemente vorgesehen, die um separate Drehachsen schwenkbar sind, um die Klammerelemente zu arretieren, nachdem diese durch manuelles Herunterdrücken der Spritze in die Halterung in die geschlossene Stellung geschwenkt wurden.

Die US 2007/0290110 offenbart eine Haltevorrichtung für ein Gerät, wie z.B. einen Haartrockner. Die Vorrichtung ist zur Wandmontage vorgesehen und umfasst ein Montageelement, das an der Wand montiert wird. Hiermit ist schwenkbar ein Positionierungselement verbunden, an dem wiederum schwenkbar einen Halteelement für das Gerät angeordnet ist. Durch die Schwenkbarkeit kann das Halteelement und somit das darin gehaltene Gerät gegenüber dem Montageelement in unterschiedlichster Weise positioniert werden. Gemäß einem Ausführungsbeispiel ist das Halteelement in etwa U-förmig ausgestaltet mit zwei gegenüber einander starren Wangen, die z.B. den Griff eines Haartrockners umfassen.

Die WO 2006/051291 offenbart ein Haarstylegerät, wie z.B. einen Straightener, zur kostenpflichtigen Nutzung, dass wenigstens einen wärmeleitendes Element umfasst, das auf das Haar eines Benutzers angewendet wird. Das Gerät ist an eine Bezahlungseinheit angeschlossen. Es kann auch eine Haltevorrichtung für das Gerät vorgesehen sein, die gemäß einer Ausgestaltung die Form eines offenen Kastens mit Lüftungsschlitzen haben kann.

Die US 3,361,265 A offenbart eine Haltevorrichtung für ein Gewehr, bei der auf einer Grundplatte zwei senkrechte Wangenelemente angeordnet sind. Die Wangenelemente bilden eine U-förmige Aufnahme für den Vorderschaft des Gewehrs. Um die Größe der Aufnahme anzupassen, sind die Wangenelemente in horizontaler Richtung gegeneinander verstellbar. In jedem Wangenelement ist ein Drahtbügel drehbar gelagert, wobei die Drahtbügel die Enden eines Stoffbandes halten, dass in die Aufnahme hineinhängt. Beim Einsetzen des Gewehrs wird das Band heruntergedrückt, wobei sich die Drahtbügel drehen. Durch Gummielemente, die am Band angeordnet sind, erfolgt ein Festklemmen des Gewehrs.

Die US 3,952,382 A zeigt einen schnell öffnenden Haken, der in Bereichen wie Reitsport, Bergsteigen etc. angewendet wird. Hierbei ist ein U-Element, welches eine erste Öse bildet, innerhalb einer Hülse verschiebbar angeordnet. An den freien Enden des U-Elements sind zwei Bügelelemente drehbar gelagert, welche durch ein zwischen ihnen angeordnetes Federelement auseinander gedrückt werden. Ein weiteres Federelement wirkt zwischen Hülse und U-Element derart, dass die Bügelelemente teilweise in die Hülse hineingezogen werden, wodurch sie zueinander gedrückt werden und eine zweite Öse bilden. Auch wenn beide Ösen belastet sind, kann durch Ziehen an der Hülse die zweite Öse geöffnet werden.

Die US 5,867,877 A zeigt eine Kupplung, die sich bei einer vorbestimmten Last selbst löst. Die Kupplung soll einem in Panik geratenen Pferd ermöglichen, sich loszureißen, wodurch Verletzungen vermieden werden. Innerhalb eines zylindrischen Gehäuses ist ein Schieberelement verschiebbar angeordnet, das endseitig eine erste Öse aufweist. Am gegenüberliegenden Ende sind zwei Bügelelemente drehbar gelagert, die durch ein Federelement auseinander gedrückt werden. Ein weiteres Federelement wirkt zwischen Gehäuse und Schieberelement derart, dass die Bügelelemente teilweise in das Gehäuse hineingezogen werden, wodurch sie zueinander gedrückt werden und eine zweite Öse bilden. Ist ein Seil in der zweiten Öse aufgenommen, so bewirkt dieses bei überschreiten einer vorbestimmten Last eine Deformation des Gehäuses, wodurch das Gehäuse gegenüber dem Schieberelement und den Bügelelementen verschoben wird. Dies wiederum bewirkt, dass letztere sich öffnen und das Seil freigeben.

Ausgehend von diesem diskutierten Stand der Technik liegt der Erfindung daher die Aufgabe zugrunde, eine Wandhalterung der eingangs genannten Art dergestalt weiterzubilden, dass sich diese eignet, um daran auch beheizte Personal-Care-Geräte, wie beispielsweise einen Straightener in der gewünschten Anordnung mit einem nach unten weisenden Kabelausgang und nach oben gerichteten Formplatten angeschlossen werden kann.

Gelöst wird diese Aufgabe durch eine Wandhalterung der eingangs genannten Art, bei der die Aufnahme zwei aus einer Offen-Stellung zum Einsetzen oder Herausnehmen des Gerätes in eine das Gerät haltende Geschlossen-Stellung verstellbare Haltearme umfasst, auf die wenigstens ein diese in ihre Offen-Stellung drückendes Federelement wirkt, welche Haltearme mit dem wenigstens einen Federelement Teil eines gegenüber einem Stellgehäuse translatorisch verschiebbaren Haltearmmoduls sind, durch welche translatorische Verschiebbarkeit des Haltearmmoduls gegenüber dem Stellgehäuse die Haltearme von ihrer Offen-Stellung in der gegenüber dem Stellgehäuse ausgezogenen Anordnung des Haltearmmoduls in ihre Geschlossen-Stellung in der gegenüber dem Stellgehäuse eingeschobenen Anordnung des Haltearmmoduls und umgekehrt bewegbar sind, wobei wenigstens einer der beiden Haltearme an seiner Außenseite eine Stellfläche aufweist, auf die ein Abschnitt des Stellgehäuses beim Einschieben des Haltearmmoduls in das Stellgehäuse zum Verstellen dieses Haltearms in seine Geschlossen-Stellung wirkt.

Diese Wandhalterung verfügt über eine Geräteaufnahme, die für die Zwecke des Anschließens des Personal-Care-Gerätes an die Wandhalterung und umgekehrt zu seiner Entnahme aus einer Offen-Stellung in eine Geschlossen-Stellung und umgekehrt gebracht werden kann. Diese Halterung verfügt über zwei Haltearme, von denen zumindest einer gegenüber dem anderen verstellbar, insbesondere verschwenkbar ist. Wenn die Differenz des Abstandes der Halteabschnitte der Haltearme zwischen den beiden Stellungen größer sein soll, bietet es sich an, beide Haltearme in der vorbeschriebenen Art und Weise verstellbar zu lagern. Größere Bewegungsbeträge werden beispielsweise dann benötigt, wenn die Haltearme in ihrem Halteabschnitt klauenartig konzipiert sind und mit dem klauenartigen Ende ein Teil des Personal-Care-Gerätes hintergriffen werden soll. Infolge der Verstellbarkeit zumindest eines Haltearmes gegenüber dem anderen kann ein daran anzuschließendes Personal-Care-Gerät in der Aufnahme verklemmt gehalten werden. Dieses erlaubt ein Anschließen eines Personal-Care-Gerätes an die Halterung unabhängig von einer vordefinierten Orientierung und somit beispielsweise bei einem Straightener in der gewünschten Anordnung, bei der die beheizten Haarformplatten nach oben weisend angeordnet sind. Zum Schutze des Gehäuses des in der Geräteaufnahme durch die Haltearme einzuklemmenden Personal-Care-Gerätes und auch zum Verbessern des Klemmschlusses tragen die Haltearme an ihrer zu der Geräteaufnahme weisenden Seite vorzugweise über ein oder mehrere gummielastische Klemmelemente.

Die Haltearme sind vorzugsweise schwenkbar gelagert, um diese von der Offen-Stellung der Geräteaufnahme in die Geschlossen-Stellung derselben und umgekehrt zu bringen. Die Haltearme sind Teil eines Haltearmmoduls, welches gegenüber einem Stellgehäuse verschiebbar ist. Dabei ist vorgesehen, dass infolge der Verschiebbarkeit die Geräteaufnahme von ihrer Offen-Stellung in ihre Geschlossen-Stellung gebracht wird. Die ausgezogene Stellung des Haltearmmoduls gegenüber dem Stellgehäuse definiert dabei die Offen-Stellung der Geräteaufnahme, während die eingeschobene Stellung die Geschlossen-Stellung darstellt. Für seine Verstellung von der Offen-Stellung in die Geschlossen-Stellung weist der zumindest eine verstellbare Haltearm außenseitig eine Stellfläche auf, die beim Verschieben des Haltearmmoduls gegenüber dem Stellgehäuse gegen einen Abschnitt des Stellgehäuses wirkt und dadurch in seine Geschlossen-Stellung verstellt wird. Die Stellfläche ist daher winklig zur Verschiebebewegung des Haltearmmoduls. Durch die Geometrie der Stellfläche des zumindest einen auf diese Weise verstellbaren Haltearms ist sein Verschwenkbetrag und die auf das in die Geräteaufnahme eingesetzte Gehäuse des Personal-Care-Gerätes wirkende Vorspannung auslegbar. Durch wenigstens ein Federelement sind die Haltearme in ihrer Offen-Stellung gehalten, wenn das Haltearmmodul sich in seiner gegenüber dem Stellgehäuse ausgezogenen Stellung befindet.

Gemäß einem Ausführungsbeispiel verfügt das Haltearmmodul über zwei voneinander beabstandete Lagerplatten, die die Haltearme zumindest bereichsweise sandwichartig einfassen. Der zumindest eine verstellbare Hebelarm ist bei einer solchen Ausgestaltung in beiden Lagerplatten schwenkbar gelagert, beispielsweise durch in diese eingreifende Lagerzapfen. Die Lagerplatten selbst sind in dem Stellgehäuse in einer Kulissenführung gehalten und geführt.

Um die notwendige Aufbautiefe der Halterung gering zu halten, ist bei einer Ausführungsform vorgesehen, den zumindest einen Haltearm nach Art eines einarmigen Hebels zu lagern. Bei einer solchen Ausgestaltung befindet sich ein als Druckfeder ausgelegtes Federelement zwischen den beiden Hebelarmen und stützt sich mit jeweils einem Ende auf der zu dem jeweils anderen Haltearm weisenden Seite ab. Daher wirkt das Federelement, damit die Haltearme in ihre Offen-Stellung gebracht werden bzw. in dieser gehalten sind. Die Geschlossen-Stellung der Geräteaufnahme, wenn der zumindest eine Haltearm aufgrund seiner abstützenden Anordnung auf den anderen Haltearm zu bewegt worden ist, ist gemäß einer Ausgestaltung durch eine Klemmung zwischen der Außenseite des zumindest einen verstellbaren Hebelarms und einem Innenwandabschnitt des Stellgehäuses fixiert. Die hierzu notwendige Klemmfläche ist typischerweise eine Fortsetzung der Stellfläche an der Außenseite des zumindest einen Haltearms. Besonders vorteilhaft ist bei dieser Konzeption, wenn das Federelement, wie vorbeschrieben, als zwischen den Haltearmen angeordnete Druckfeder ausgelegt ist. Anstelle der vorbeschriebenen Klemmung oder auch zusätzlich ist eine Verrastung zwischen dem Haltearmmodul und dem Stellgehäuse möglich. Hierdurch erhält ein Benutzer zugleich eine haptische Rückmeldung, darüber dass sich die Geräteaufnahme in ihrer Geschlossen-Stellung befindet.

Vorzugsweise sind die Haltearme mit einem klauenartig konzipierten Ende ausgerüstet, mit dem diese das Gehäuse des an die Halterung anzuschließenden Personal-Care-Gerätes oder eines Teil desselben umgreifen. Bei Personal-Care-Geräten, die zwei gelenkig zueinander verschwenkbare Arme aufweisen, wie dieses beispielsweise bei einem Straightener der Fall ist, ist es ausreichend, wenn lediglich ein Arm in die Geräteaufnahme eingesetzt und von den Haltearmen festgelegt wird. Die klauenartigen Enden der Haltearme hintergreifen bei einer solchen Ausgestaltung dann einen der Arme im Griffbereich des Straighteners.

Die Wandhalterung kann einen Teil einer Anordnung bilden, welche die Wandhalterung und ein Personal-Care-Gerät umfasst.

Vorteile und vorteilhafte Weiterbildungen der beanspruchten Halterung ergeben sich auch aus der nachfolgenden Beschreibung eines Ausführungsbeispiels unter Bezugnahme auf die beigefügten Figuren. Es zeigen:
- **Fig. 1:**: eine perspektivische Ansicht einer Halterung für ein Personal-Care-Gerät, hier: für einen Straightener,
- **Fig. 2:**: einen Horizontalschnitt durch die Halterung der Figur 1 im Bereich der Geräteaufnahme in einer ersten Stellung der Geräteaufnahme (der Offen-Stellung),
- **Fig. 3:**: einen Vertikalschnitt durch die Geräteaufnahme der Halterung der Figur 1,
- **Fig. 4:**: einen Horizontalschnitt durch die Halterung der Figur 1 im Bereich der Geräteaufnahme in einer weiteren Stellung der Geräteaufnahme (der Geschlossen-Stellung),
- **Fig. 5:**: einen Horizontalschnitt durch die in Figur 1 gezeigte Anordnung, umfassend die Halterung und einen Straightener bei dem Vorgang des Anschließens des Straighteners an die Halterung,
- **Fig. 6:**: der an die Halterung angeschlossene Straightener und
- **Fig. 7a-7c:**: eine Abfolge in einer perspektivischen Ansicht zum Anschließen des Straighteners an die Halterung.

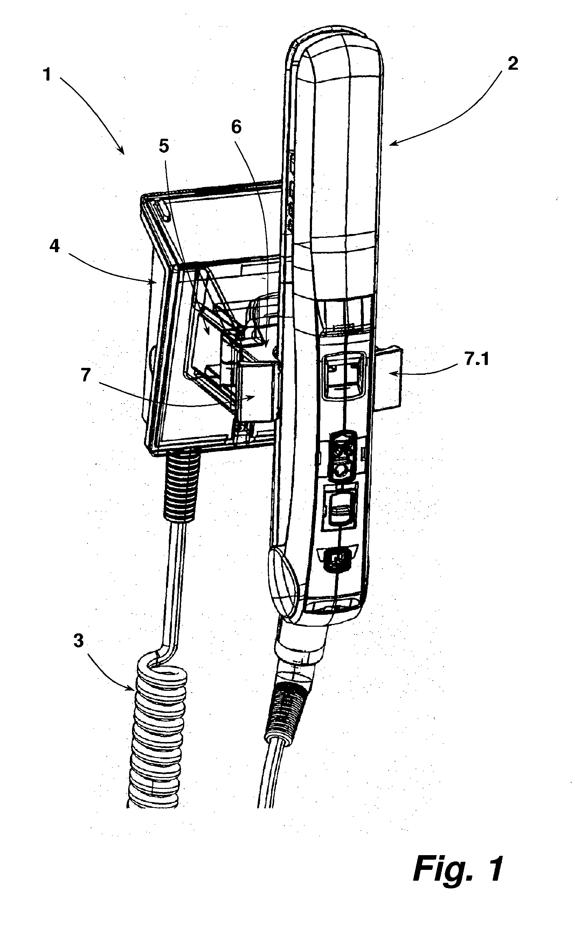

Figur 1 zeigt eine Anordnung umfassend eine als Wandhalterung 1 ausgeführte Halterung und einen Straightener 2 als elektrisches Personal-Care-Gerät. Figur 1 zeigt den Straightener 2, der an die Wandhalterung 1 angeschlossen und somit von dieser gehalten wird. Die Halterung 1 ist in nicht näher dargestellter Art und Weise an einer Wand befestigt und umfasst die elektrischen Anschlüsse zum Kontaktieren des Straighteners 2. Der Straightener 2 ist über ein elektrisches Anschlusskabel 3 an die in der Wandhalterung 1 eingebauten elektrischen Anschlüsse angeschlossen. Durch das Anschlusskabel 3 ist somit der Straightener 2 ohne Zwischenschaltung eines Steckers oder Steckverbinders verbunden. Die Wandhalterung 1 umfasst ein Gehäuse 4, an dessen Vorderseite ein von dem Gehäuse 4 abragendes Stellgehäuse 5 angeordnet ist. Gegenüber dem Stellgehäuse 5 ist ein Haltearmmodul 6 einschiebbar und ausziehbar. In seiner in Figur 1 gezeigten Stellung befindet sich das Haltearmmodul 6 in seiner gegenüber dem Stellgehäuse 5 eingeschobenen Stellung. In dieser Stellung ist der Straightener 2 an die Wandhalterung 1 angeschlossen.

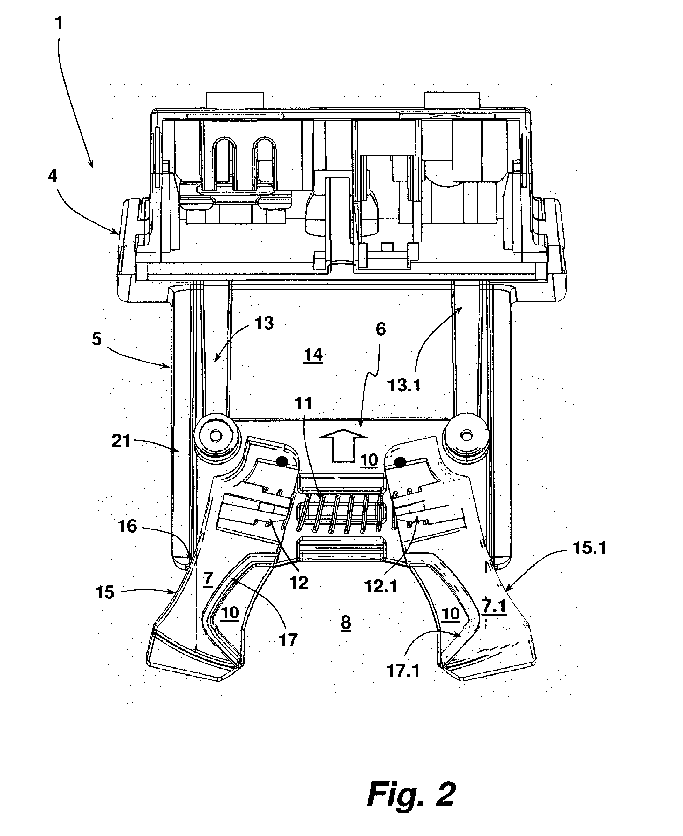

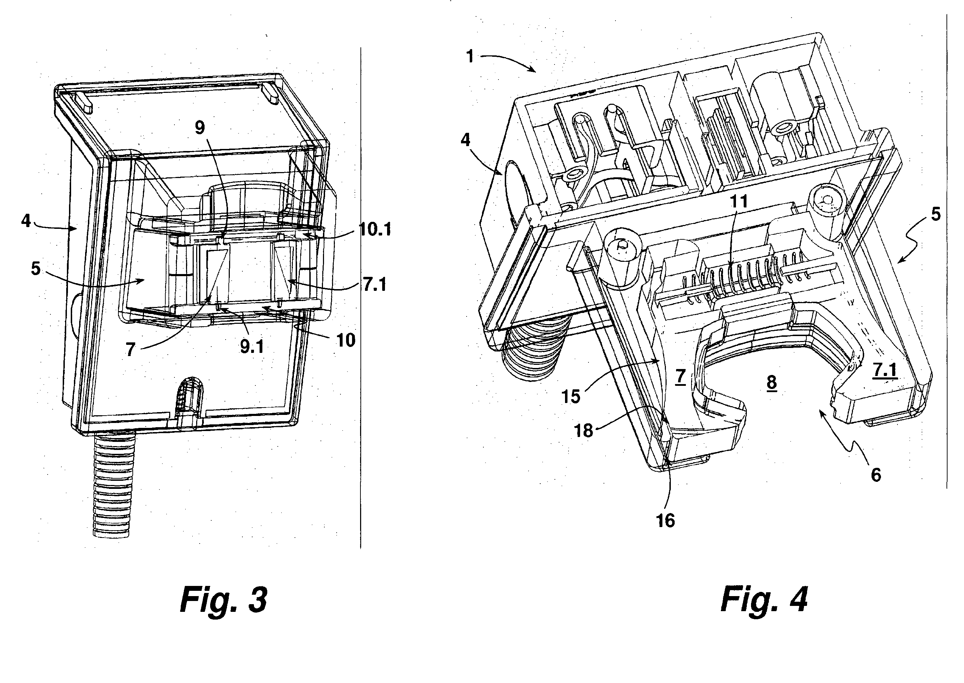

Das Haltearmmodul 6 verfügt, wie aus Figur 2 erkennbar, über zwei Haltearme 7, 7.1. Diese sind an ihrem von dem Stellgehäuse 5 weg weisenden Ende klauenartig ausgebildet und fassen eine Geräteaufnahme 8 ein. Die beiden Haltearme 7, 7.1 sind mittels jeweils eines Lagerzapfens 9, 9.1, wie aus Figur 3 besser ersichtlich und anhand des Haltearmes 7 kenntlich gemacht, in einer unteren Lagerplatte 10 und in einer oberen Lagerplatte 10.1 schwenkbar gelagert. Gleiches gilt für den Haltearm 7.1. Die Lagerplatten 10, 10.1 fassen die Haltearme 7, 7.1 somit sandwichartig ein. Die Anordnung der Lagerzapfen 9, 9.1 ist in Figur 2 schematisiert eingezeichnet. Mit Abstand zu den Lagerzapfen 9, 9.1 in Richtung zu dem klauenartigen Ende der Haltearme 7, 7.1 ist eine Druckfeder 11 zwischen den beiden Haltearmen 7, 7.1 angeordnet. Die Druckfeder 11 stützt sich mit jeweils einem Ende an jeweils einem Haltearm 7 bzw. 7.1 ab und ist zu ihrer Halterung auf jeweils einen Federzapfen 12, 12.1 des jeweiligen Haltearms 7 bzw. 7.1 aufgesteckt. Durch die Druckfeder 11 sind die beiden Haltearme 7, 7.1 bestrebt, hinsichtlich ihres klauenartigen Endes auseinander gedrückt zu werden, um die Geräteaufnahme 8 in ihrer in Figur 2 gezeigten Offen-Stellung zu halten. In der in Figur 2 gezeigten Offen-Stellung der Geräteaufnahme 8 ist das Haltearmmodul 6 gegenüber dem Stellgehäuse 5 ausgezogen.

Die Lagerplatten 10, 10.1 setzen sich bei dem dargestellten Ausführungsbeispiel bis kurz vor das klauenartige Ende der Haltearme 7, 7.1 fort. Daher sind die Lagerplatten 10, 10.1, wie in Figur 2 anhand der Lagerplatte 10 erkennbar, im Bereich der Haltearme 7, 7.1 zum Einfassen der Geräteaufnahme 8 gegabelt ausgebildet.

Die Lagerplatten 10, 10.1 sind in jeweils zwei Kulissenführungen 13, 13.1 der oberseitigen bzw. unterseitigen Wand 14 des Stellgehäuses 5 gelagert. In Figur 2 ist die untere Wand 14 mit ihren Kulissenführungen 13, 13.1 sichtbar.

Die von der Geräteaufnahme 8 weg weisende Außenseite der Haltearme 7, 7.1 bildet eine Stellfläche 15, 15.1. Die Stellflächen 15, 15.1 sind nachfolgend anhand der Stellfläche 15 des Haltearms 7 beschrieben. Gleiches gilt ebenfalls für die Stellfläche 15.1. Die Stellfläche 15 liegt an einem von dem Gehäuse 4 der Wandhalterung 1 wegweisenden Ende gerundet ausgebildetem Wandabschnitt 16 des Stellgehäuses 5 an. Der Wandabschnitt 16 bildet die vordere gerundete Kante einer Seitenwand des Stellgehäuses 5. Die Stellfläche 15 ist in Bezug auf die gegenüber dem Stellgehäuse 5 translatorische Verschiebebewegung des Haltearmmoduls 6 - durch den Blockfeil in Figur 2 angedeutet - geneigt, damit im Zuge des Einschiebens des Haltearmmoduls 6 in das Stellgehäuse 5 der Haltearm 7 in Richtung zu dem Haltearm 7.1 um seine Lagerzapfen 9, 9.1 verschwenkt werden kann. Bei dem dargestellten Ausführungsbeispiel nimmt die Neigung der Stellfläche 15 in Richtung zu dem freien Ende des Haltearmes 7 zu. Mithin ist die Stellfläche 15, wie aus Figur 2 erkennbar, gekrümmt. Die Neigung der Stellfläche 15 zur Verschieberichtung des Haltearmmoduls 6 definiert bei dem dargestellten Ausführungsbeispiel die Kraftumsetzung als Untersetzung.

Die Haltearme 7, 7.1 sind an ihrer zur Geräteaufnahme 8 weisenden Seite mit einem elastischen Streifen 17, 17.1 ausgerüstet. Die Streifen 17, 17.1 sind gummielastisch und dienen zum Verklemmen eines Armes des Straighteners 2 zum Anschließen desselben an die Wandhalterung 1.

Figur 4 zeigt in einem Horizontalschnitt das Haltearmmodul 6 in seiner in das Stellgehäuse 5 eingeschobenen Stellung. Im Zuge des Einschiebens des Haltearmmoduls 6 in das Stellgehäuse 5 sind die beiden Haltearme 7, 7.1 zum Schließen der Geräteaufnahme 8 aufeinander zu bewegt worden, und zwar gegen die Rückstellkraft der Druckfeder 11. Gehalten wird das Haltearmmodul 6 in der in Figur 4 gezeigten Geschlossen-Stellung in Bezug auf die Geräteaufnahme 8 durch einen Reibschluss zwischen einem sich an die Stellfläche 15 anschließenden Klemmabschnitt 18 und der Innenseite der an den Wandabschnitt 16 grenzenden Seitenwand. Die in der Druckfeder 11 infolge der vorbeschriebenen Verschiebebewegung gespeicherte Energie sichert den Reibschluss zwischen dem Haltearmmodul 6 und dem Stellgehäuse 5.

Um die Geräteaufnahme 8 erneut in ihre Offen-Stellung zu bringen, wird das Haltearmmodul 6 aus dem Stellgehäuse 5 herausgezogen werden. Dabei kann, nachdem der Wandabschnitt 16 in Kontakt mit der geneigten Stellfläche 15 gelangt, diese Auszugsbewegung durch die dann erfolgende Rückstellkraft der Druckfeder 11 unterstützt werden.

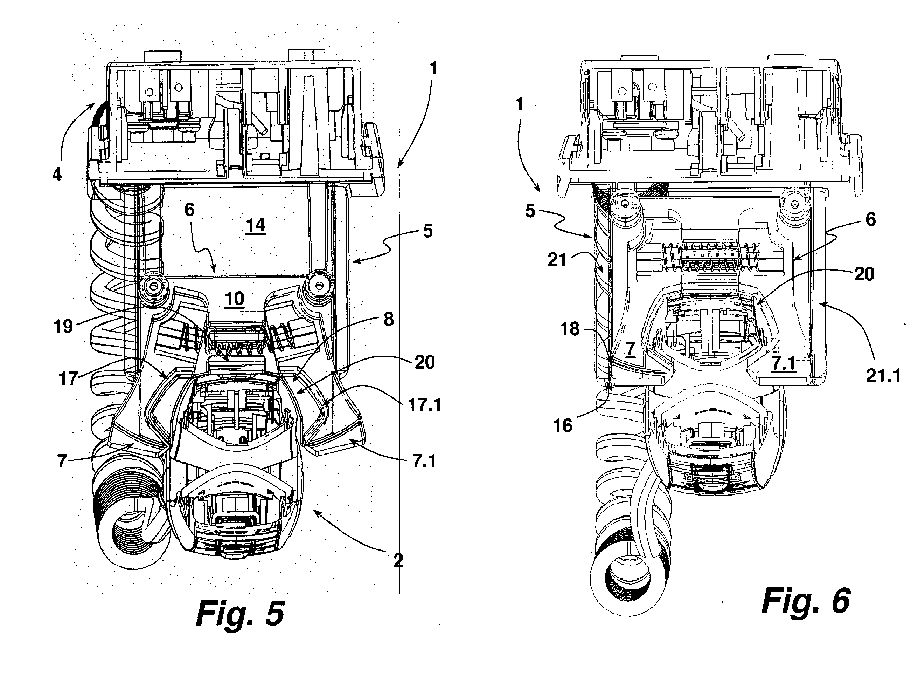

Figur 5 zeigt die Wandhalterung 1 mit dem Straightener 2, der an der Wandhalterung 1 festgelegt werden soll. Die Wandhalterung 1 befindet sich zu diesem Zweck in ihrer in Figur 2 gezeigten Stellung, in der das Haltearmmodul 6 sich in seiner gegenüber dem Stellgehäuse 5 ausgezogenen Position befindet. Die Geräteaufnahme 8 ist geöffnet; die Haltearme 7, 7.1 sind in ihrer Offen-Stellung. Die Geräteaufnahme 8 trägt innenseitig zwischen den beiden Haltearmen 7, 7.1 ein elastisches Pufferelement 19, an das die Außenseite des einen Armes 20 des Straighteners 1 zur Anlage gebracht wird. Festgelegt wird der Straightener 2 dadurch, dass der Arm 20 in der Geräteaufnahme 8 befindliche Arm 20 des Straighteners 2 bzw. der ganze Straightener 2 in Richtung zu dem Gehäuse 4 der Wandhalterung 1 gedrückt wird. Im Zuge dieser Bewegung wird das Haltearmmodul 6 in das Stellgehäuse 5 eingeschoben. Durch die Einschubbewegung werden, wie dieses vorbeschrieben ist, die Haltearme 7, 7.1 aufeinander zu bewegt, bis dass diese mit ihren klauenartigen Enden den in die Geräteaufnahme 8 eingesetzten Arm 20 des Straighteners 2 um- bzw. bereichsweise hintergreifen. Die Einschubbewegung endet, wenn sich die Klemmabschnitte 18 der Haltearme 7, 7.1 an der Innenseite der Seitenwände 21, 21.1 des Stellgehäuses 5 abstützen. Die Verschiebebewegung ist durch die Kulissenführung 13, 13.1 begrenzt. Die lichte Weite der Geräteaufnahme 8 in der Geschlossen-Stellung des Haltearmmoduls 6 ist geringfügig kleiner als der Durchmesser des Armes 20 des Straighteners 2. Dieses dient dem Zweck, dass die elastischen Streifen 17, 17.1 zumindest bereichsweise etwas komprimiert werden, wodurch der Haltearm 20 des Straighteners 2 reibschlüssig an die Wandhalterung 1 angeschlossen ist. Die Nachgiebigkeit der Streifen 17, 17.1 dient auch zum Ausgleich von Gerätetoleranzen.

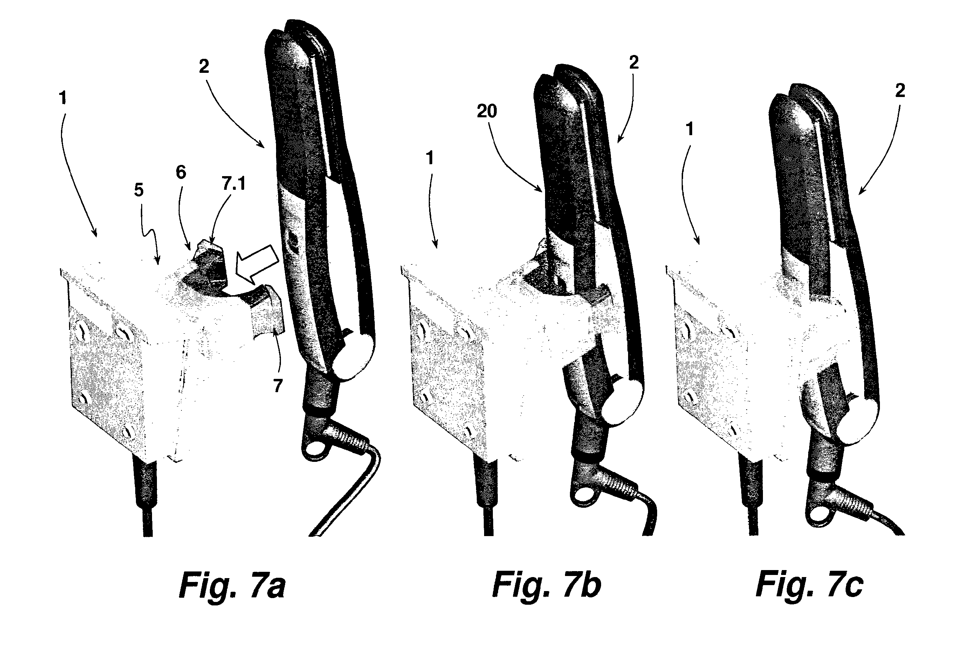

Figuren 7a bis 7c zeigen in einer fotorealistischen Animation einzelne Schritte zum Festlegen des Straighteners 2 an die Wandhalterung 1. Figur 7a zeigt den Straightener 2, beispielsweise nach einem Gebrauch, wenn dieser an die Wandhalterung 1 angeschlossen werden soll. Das Haltearmmodul 6 befindet sich in seiner gegenüber dem Stellgehäuse 5 ausgezogenen Stellung. Die Geräteaufnahme 8 ist mithin in ihrer Offen-Stellung. Figur 7b zeigt den mit seinem Arm 20 in die Geräteaufnahme 8 eingesetzten Straightener 2. Durch Andrücken des Straighteners 2 in Richtung zu dem Gehäuse 4 der Wandhalterung 1 wird das Haltearmmodul 6 in das Stellgehäuse 5 eingeschoben, bis die Stellung der beiden Elemente, wie in Figur 5 gezeigt, erreicht ist. Dieses ist in Figur 7c wiedergegeben. Die Montage des Straighteners 2 an die Wandhalterung 1 ist also denkbar einfach. Zum Abnehmen des Straighteners 2 wird dieser schlichtweg von der Wandhalterung 1 abgezogen, durch welche Bewegung das Haltearmmodul 6 gegenüber dem Stellgehäuse 5 ausgezogen wird, sich in diesem Zuge die Haltearme 7, 7.1 öffnen und den Straightener 2 zur Entnahme freigeben.

Die Erfindung ist anhand eines Ausführungsbeispiels beschrieben worden. Es wird deutlich, dass durch die durch die Haltearme gebildete Klammer auch solche Personal-Care-Geräte an eine Wandhalterung angeschlossen werden können, die sich zu einer Halterung in einer köcherartigen Halterung nicht eignen.

### Bezugszeichenliste

- 1: Wandhalterung
- 2: Straightener
- 3: Anschlusskabel
- 4: Gehäuse
- 5: Stellgehäuse
- 6: Haltearmmodul
- 7,7.1: Haltearm
- 8: Geräteaufnahme
- 9, 9.1: Lagerzapfen
- 10, 10.1: Lagerplatte
- 11: Druckfeder
- 12, 12.1: Federzapfen
- 13, 13.1: Kulissenführung
- 14: Wand
- 15, 15.1: Stellfläche
- 16: Wandabschnitt
- 17, 17.1: elastischer Streifen
- 18: Klemmabschnitt
- 19: Pufferelement
- 20: Arm
- 21, 21.1: Seitenwand

## Patentansprüche

1. Wandhalterung für ein elektrisches Personal-Care-Gerät mit einer Geräteaufnahme (8) zum Einsetzen eines Teils des Gerätes (2), wenn dieses an die Wandhalterung (1) angeschlossen werden soll, **dadurch gekennzeichnet, dass** die Aufnahme (8) zwei aus einer Offen-Stellung zum Einsetzen oder Herausnehmen des Gerätes (2) in eine das Gerät (2) haltende Geschlossen-Stellung verstellbare Haltearme (7, 7.1) umfasst, auf die wenigstens ein diese in ihre Offen-Stellung drückendes Federelement (11) wirkt, welche Haltearme (7, 7.1) mit dem wenigstens einen Federelement (11) Teil eines gegenüber einem Stellgehäuse (5) translatorisch verschiebbaren Haltearmmoduls (6) sind, durch welche translatorische Verschiebbarkeit des Haltearmmoduls (6) gegenüber dem Stellgehäuse (5) die Haltearme (7, 7.1) von ihrer Offen-Stellung in der gegenüber dem Stellgehäuse (5) ausgezogenen Anordnung des Haltearmmoduls (6) in ihre Geschlossen-Stellung in der gegenüber dem Stellgehäuse (5) eingeschobenen Anordnung des Haltearmmoduls (6) und umgekehrt bewegbar sind, wobei wenigstens einer der beiden Haltearme (7, 7.1) an seiner Außenseite eine Stellfläche (15, 15.1) aufweist, auf die ein Abschnitt des Stellgehäuses (5) beim Einschieben des Haltearmmoduls (6) in das Stellgehäuse (5) zum Verstellen dieses Haltearms (7, 7.1) in seine Geschlossen-Stellung wirkt.

2. Wandhalterung nach Anspruch 1, **dadurch gekennzeichnet, dass** beide Haltearme (7. 7.1) verstellbar gelagert sind und jeweils eine Stellfläche (15, 15.1) aufweisen, auf die jeweils ein Abschnitt des Stellgehäuses (5) beim Einschieben des Haltearmmoduls (6) in das Stellgehäuse (5) zum Verstellen der Haltearme (7, 7.1) in ihre Geschlossen-Stellung wirkt.

3. Wandhalterung nach Anspruch 1 oder 2, **dadurch gekennzeichnet, dass** das Haltearmmodul (6) über zwei die Haltearme (7, 7.1) bereichsweise sandwichartig einfassende Lagerplatten (10, 10.1) verfügt, in denen der zumindest eine verstellbare Haltearm (7, 7.1) gelagert ist.

4. Wandhalterung nach Anspruch 3, **dadurch gekennzeichnet, dass** die Lagerplatten (10, 10.1) in dem Stellgehäuse (5) in Kulissenführungen (13, 13.1) gehalten sind.

5. Wandhalterung nach einem der Ansprüche 1 bis 4, **dadurch gekennzeichnet, dass** der zumindest eine verstellbare Haltearm (7, 7.1) nach Art eines einarmigen Hebels gelagert ist und das zumindest eine Federelement (11) zwischen den Haltearmen (7, 7.1), sich mit jedem Ende an einem Haltearm (7, 7.1) abstützend, angeordnet ist.

6. Wandhalterung nach einem der Ansprüche 1 bis 5, **dadurch gekennzeichnet, dass** die Haltearme (7, 7.1) an ihrer zur Geräteaufnahme (8) weisenden Seite ein oder mehrere elastische Klemmelemente (17, 17.1) tragen, die in der Geschlossen-Stellung der Haltearme unter Vorspannung stehend gegen das darin angeordnete Personal-Care-Gerät (2) oder gegen ein Teil desselben wirken.

7. Wandhalterung nach einem der Ansprüche 1 bis 6, **dadurch gekennzeichnet, dass** die Haltearme (7, 7.1) in ihrem die Geräteaufnahme (8) einfassenden Abschnitt klauenartig ausgeführt sind.

8. Wandhalterung nach Anspruch 7, **dadurch gekennzeichnet, dass** die Haltearme (7, 7.1) dazu ausgebildet sind, mit ihrem Klauenende in eine Vertiefung des Gerätes einzugreifen, wenn das Gerät an die Wandhalterung (1) angeschlossen ist.

9. Wandhalterung nach Anspruch 8, **dadurch gekennzeichnet, dass** sie als Wandhalterung für einen Straightener ausgebildet ist und dass die Haltearme (7, 7.1) dazu ausgebildet sind, einen Arm (20) des Straighteners zumindest teilweise zu umgreifen, wenn dieser an die Wandhalterung (1) angeschlossen ist.

10. Wandhalterung nach Anspruch 6, **dadurch gekennzeichnet, dass** sie dazu ausgebildet ist, das zwischen den Haltearmen (7, 7.1) gehaltene Gerät (2) oder ein Teil desselben zwischen den Haltearmen (7, 7.1) unter Deformierung zumindest eines Teils des oder der elastischen Klemmelemente (17, 17.1) zu halten.

11. Wandhalterung nach einem der Ansprüche 1 bis 11, **dadurch gekennzeichnet, dass** in der Wandhalterung (1) elektrische Anschlusskomponenten für das Gerät (2) untergebracht sind.

12. Anordnung, umfassend eine Wandhalterung (1) nach einem der Ansprüche 1 bis 11 sowie ein elektrisches Personal-Care-Gerät (2).

## Claims

1. Wall holder for an electric personal care device with a device slot (8) for the insertion of one part of the device (2), when the latter is to be connected to the wall holder (1), **characterised in that** the slot (8) comprises two holding arms (7, 7.1) which can be moved from an open position for inserting or removing the device (2) into a closed position holding the device (2), wherein at least one spring element (11) pressing said holding arms into their open position acts on them, wherein said holding arms (7, 7.1) with the at least one spring element (11) are part of a holding arm module (6) which can be displaced in a translational manner relative to a control housing (5), and by means of this ability for translational displacement of the holding arm module (6) relative to the control housing (5), the holding arms (7, 7.1) can be moved from their open position in the extended arrangement of the holding arm module (6) relative to the control housing (5), into their closed position in the retracted arrangement of the holding arm module (6) relative to the control housing (5) and vice versa, wherein at least one of the two holding arms (7, 7.1) has on its outside a support surface (15, 15.1) on which a section of the control housing (5) acts when the holding arm module (6) is pushed into the control housing (5) to move this holding arm (7, 7.1) into its closed position.

2. Wall holder according to claim 1, **characterised in that** both holding arms (7, 7.1) are mounted such that they can be moved and have in each case a support surface (15, 15.1), on which in each case one section of the control housing (5) acts when the holding arm module (6) is retracted into the control housing (5) to move the holding arms (7, 7.1) into their closed position.

3. Wall holder according to claim 1 or 2, **characterised in that** the holding arm module (6) has two bearing plates (10, 10.1) holding the holding arms (7, 7.1) in a sandwich-like arrangement in parts, and in said bearing plates the at least one movable holding arm (7, 7.1) is mounted.

4. Wall holder according to claim 3, **characterised in that** the bearing plates (10, 10.1) are held in sliding block guides (13, 13.1) in the control housing (5).

5. Wall holder according to any one of claims 1 to 4, **characterised in that** the at least one movable holding arm (7, 7.1) is mounted in the manner of a one-armed lever and the at least one spring element (11) is arranged between the holding arms (7, 7.1) with each end supported on a holding arm (7, 7.1).

6. Wall holder according to any one of claims 1 to 5, **characterised in that** the holding arms (7, 7.1) bear, on their side facing the device slot (8), one or more elastic clamping elements (17, 17.1) which, in the closed position of the holding arms, standing under pretension, act against the personal care device (2) arranged therein or against one part of it.

7. Wall holder according to any one of claims 1 to 6, **characterised in that** the holding arms (7, 7.1) are made like claws in their section enclosing the device slot (8).

8. Wall holder according to claim 7, **characterised in that** the holding arms (7, 7.1) are made so that their claw ends engage in a recess in the device when the device is connected to the wall holder (1).

9. Wall holder according to claim 8, **characterised in that** it is made as a wall holder for a straightener and that the holding arms (7, 7.1) are made to reach around one arm (20) of the straightener are least partially, when it is connected to the wall holder (1).

10. Wall holder according to claim 6, **characterised in that** it is made to hold the device (2) held between the holding arms (7, 7.1) or one part of it between the holding arms (7, 7.1) with deformation of at least one part of the elastic clamping element or elements (17, 17.1).

11. Wall holder according to any one of claims 1 to 11, **characterised in that** electric connection components for the device (2) are housed in the wall holder (1).

12. Arrangement comprising a wall holder (1) according to any one of claims 1 to 11 and an electric personal care device (2).

## Revendications

1. Fixation murale pour un appareil électrique de soins personnels comprenant un support d'appareil (8) permettant d'y placer une partie de l'appareil (2) quand ce dernier doit être maintenu sur la fixation murale (1), **caractérisée en ce que** le support (8) comprend deux bras de maintien (7, 7.1) réglables depuis une position ouverte pour insérer ou retirer l'appareil (2) à une position fermée de maintien de l'appareil (2), sur lesquels agit au moins un élément à ressort (11) qui les pousse en position d'ouverture, lesquels bras de maintien (7, 7.1) munis de l'au moins un élément à ressort (11) faisant partie d'un module (6) à bras de maintien qui peut être mobilisé par rapport à un logement (5) de positionnement, grâce à laquelle mobilité en translation du module (6) à bras de maintien par rapport au logement (5) de positionnement, les bras de maintien (7, 7.1) sont mobiles et passent de leur position ouverte dans une disposition déployée du module (6) à bras de maintien par rapport au logement (5) de positionnement, à une position fermée dans une disposition rétractée du module (6) à bras de maintien par rapport au logement (5) de positionnement, et inversement, au moins un des deux bras de maintien (7, 7.1) présentant sur sa face extérieure une surface de positionnement (15, 15.1), sur laquelle agit un tronçon du logement de positionnement (5) au moment où le module (6) à bras de maintien coulisse dans le logement (5) de positionnement afin de mettre ce bras de maintien (7, 7.1) dans sa position fermée.

2. Fixation murale selon la revendication 1, **caractérisée en ce que** les deux bras de maintien (7, 7.1) sont logés de façon réglable et présentent respectivement une surface de positionnement (15, 15.1), sur laquelle agit respectivement un tronçon du logement (5) de positionnement lorsque le module (6) à bras de maintien coulisse dans le logement (5) de positionnement afin de ramener les bras de maintien (7, 7.1) dans leur position fermée.

3. Fixation murale selon la revendication 1 ou 2, **caractérisée en ce que** le module (6) à bras de maintien dispose de deux plaques de réception (10, 10.1) enchâssant en sandwich les bras de maintien (7, 7.1) sur certains tronçons, dans lesquelles est logé l'au moins un bras de maintien (7, 7.1) réglable.

4. Fixation murale selon la revendication 3, **caractérisée en ce que** les plaques de réception (10, 10.1) sont maintenues dans le logement (5) de positionnement dans des guides (13, 13.1) de coulisse.

5. Fixation murale selon l'une des revendications 1 à 4, **caractérisée en ce que** l'au moins un bras de maintien (7, 7.1) réglable est logé à la manière d'un levier à un bras, et l'au moins un élément à ressort (11) est disposé entre les bras de maintien (7, 7.1), en appui par chaque extrémité sur un bras de maintien (7, 7.1).

6. Fixation murale selon l'une des revendications 1 à 5, **caractérisée en ce que** les bras de maintien (7, 7.1) supportent sur leur face orientée vers le support d'appareil (8) un ou plusieurs éléments de serrage (17, 17.1) élastiques, qui, dans la position fermée des bras de maintien, agissent sous l'effet d'une précontrainte contre l'appareil (2) de soins personnels ou contre une partie de ce dernier quand il est maintenu dans le support.

7. Fixation murale selon l'une des revendications 1 à 6, **caractérisée en ce que** les bras de maintien (7, 7.1) sont conformés, dans leur tronçon enserrant le support d'appareil (8), à la façon de pinces.

8. Fixation murale selon la revendication 7, **caractérisée en ce que** les bras de maintien (7, 7.1) sont conformés de manière à s'engager par leurs extrémités en forme de pince, dans un évidement de l'appareil, lorsque l'appareil est mis sur la fixation murale (1).

9. Fixation murale selon la revendication 8, **caractérisée en ce qu'**elle est conformée en tant que fixation murale pour un lisseur et que les bras de maintien (7, 7.1) sont conformés pour enserrer au moins partiellement un bras (20) du lisseur, lorsque celui-ci est mis sur la fixation murale (1).

10. Fixation murale selon la revendication 6, **caractérisée en ce qu'**elle est conformée afin de maintenir l'appareil (2) positionné entre les bras de maintien (7, 7.1) ou une partie de celui-ci entre les bras de maintien (7, 7.1) en déformant au moins une partie de l'élément ou des éléments (17, 17.1) élastiques de serrage.

11. Fixation murale selon l'une des revendications 1 à 11, **caractérisée en ce que** des composants de raccordement électrique destinés à l'appareil (2) sont logés dans la fixation murale (1).

12. Disposition, comprenant une fixation murale (1) selon l'une des revendications 1 à 11 ainsi qu'un appareil (2) électrique de soins personnels.
